Europäisches Patentamt

European Patent Office

Office européen des brevets

(19)

(11) Veröffentlichungsnummer: **0 185 302 B1**

# (12) EUROPÄISCHE PATENTSCHRIFT

(45) Veröffentlichungstag der Patentschrift: 04.12.91

(21) Anmeldenummer: 85115736.2

(22) Anmeldetag: 10.12.85

(51) Int. Cl.⁵: **A23L 1/236**, C12P 19/02, C12P 19/18

(54) Süssungsmittel, Verfahren zur Herstellung und Verwendung desselben.

(30) Priorität: 19.12.84 DE 3446380

(43) Veröffentlichungstag der Anmeldung:
25.06.86 Patentblatt 86/26

(45) Bekanntmachung des Hinweises auf die
Patenterteilung:
04.12.91 Patentblatt 91/49

(84) Benannte Vertragsstaaten:
AT BE CH DE FR GB IT LI LU NL SE

(56) Entgegenhaltungen:

CARBOHYDRATE RESEARCH 121 (1983), Seiten 279-286, Amsterdem, NL; J.F. ROBYT et al: "Relative, Quantitative Effects of Acceptors in the Reaction of Leuconostoc mesenteroides B-512F Dextransucrase"

JOURNAL OF THE AMERICAN CHEMICAL SOCIETY Band 78, 1956, pages 2514-2518; F.H. STODOLA et al.: "The Preparation, Properties and Structure of the Disaccharide Leucrose"

BIOCHEMISTRY JOURNAL Band 79, 1961, pages 549-553; E.J. BOURNE:
"Oligosaccharides in Dextran-Producing Cultures of Streprococcus bovis"

DIE NAHRUNG Band 8, Berlin, DDR; H. Ruttloff: "Ueber die Saccharide von Dextranabläufen und ihren Umsatz im tierischen Intestinaltrakt unter besonderer Berücksichtigung der Leucrose"

(73) Patentinhaber: PFEIFER & LANGEN
Linnicher Strasse 48
W-5000 Köln 41(DE)

(72) Erfinder: Schwengers, Dieter, Dr. Dipl.-Chem.
Jussenhovener Strasse 37
W-4047 Dormagen(DE)
Erfinder: Benecke, geb. Zeuner, Herta
Hermannstrasse 2a
W-5020 Frechen-Grefrath(DE)

(74) Vertreter: Werner, Hans-Karsten, Dr. et al
Deichmannhaus am Hauptbahnhof
W-5000 Köln 1(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Süßungsmittel für Nahrungs-, Genuß- und Futtermittel in fester oder flüssiger Form. Weiterhin betrifft die Erfindung Verfahren zur Herstellung dieses Süßungsmittels und seine Verwendung, insbesondere in gereinigter Form als nicht-kariogenes, für Diabetiker geeignetes, energetisch voll verwertbares, gut verträgliches Süßungsmittel

Die Leucrose (5-O-alpha-D-Glucopyranosyl-D-fructose) ist bisher nur als unerwünschtes Nebenprodukt bei der Synthese von Dextranen durch Einwirkung von Leuconostoc mesenteroides auf Saccharoselösungen in Erscheinung getreten; vgl. U. Behrens, M. Ringpfeil, Mikrobielle Polysaccharide, Akademie-Verlag Berlin, 1964, Seiten 37-39. Aus den Untersuchungen von Robyt und Eklund, Carbohydrate Research 121 (1983), Seiten 279-286, geht hervor, daß Fructose bei einem Molverhältnis von Fructose : Saccharose wie 1 : 1 etwa 85 % Dextrane und 2,2 % eines Gemisches von Leucrose und Isomaltulose liefert.

Eine Isolierung und Reinigung der Leucrose aus diesen Gemischen ist außerordentlich schwierig, so daß die Eigenschaften dieses Disaccharides praktisch noch nicht untersucht und publiziert worden sind. Die Abtrennung und Reinigung ist insbesondere dadurch so schwierig, daß sich die Leucrose auf den im technischen Maßstab bewährten Polystyrolsulfonatkationenaustauschern in der Calciumform chromatographisch wie Glucose und Saccharose verhält und daher von diesen beiden Komponenten praktisch nicht abgetrennt werden kann.

Im Journal of the American Chemical Society, Band 78 (JACS 78), Seiten 2514 bis 2518 (1956) wird die Isolierung von Leucrose als Nebenprodukt der Dextranherstellung in einer Ausbeute von 7,9 % bezogen auf die eingesetzte Saccharose beschrieben; vgl. S. 2516, Spalte 2, 4. vollständiger Absatz. Zwei Absätze tiefer findet sich im Abschnitt "Properties of Leucrose" die Mitteilung, daß die Leucrose nicht sehr süß sei. Diese Angabe ist sehr vage, da sie keine relative Süßkraft im Vergleich z.B. mit der Saccharose enthält. Unter nicht sehr süßen Zuckern versteht man beispielsweise Lactose, die etwa 30 % der Süßkraft von Saccharose aufweist. Bereits Glucose mit einer Süßkraft von etwa 50 % der Saccharose wird durchaus noch als süß empfunden. Aufgrund der niedrigen Süßkraft der Lactose wird diese im allgemeinen nicht als Süßungsmittel, sondern überwiegend als Füllstoff, Aromaverstärker und Tablettenfüllmittel verwendet.

Erst neuere, durch die Anmelderin veranlaßte Messungen der relativen Süßkraft haben ergeben, daß die Süßkraft der Leucrose tatsächlich bei etwa 50 - 60 % der Saccharose liegt und damit sogar etwas oberhalb der Glucose. Die in der Literatur vorhandene Aussage "nicht sehr süß" hat sicherlich niemanden in der Nahrungsmittelindustrie dazu bewogen, ein Herstellverfahren für Leucrose zu entwickeln.

Biochem. J. 79, Seiten 549 bis 553 (1961) beschreibt Nebenprodukte bei der Dextranbildung durch Streptococcus bovis. Es wurde Leucrose in einer Ausbeute von 1,5 %, bezogen auf Saccharose, erhalten; vgl. Tabelle 1. Diese Literaturstelle macht keinerlei Aussagen über Eigenschaften und mögliche Verwendungen der Leucrose.

In Carbohydrate Research, 62 (1978) 281-287, wird eine chemische Totalsynthese der Leucrose ausgehend von Glucose beschrieben. Die Ausbeute dieser Synthese beträgt über alle Stufen etwa 3 %. Die Ausbeute von 53 % bezieht sich nur auf die letzte Stufe von insgesamt 13 Stufen. Diese Totalsynthese kann nur von wissenschaftlichem Interesse sein und kommt niemals für eine wirtschaftliche Synthese der Leucrose in Frage.

Die Nahrung, Band 8, S. 523-531 (1964), berichtet über Saccharide von Dextranabläufen und ihren Umsatz im tierischen Intestinaltrakt unter besonderer Berücksichtigung der Leucrose. Diese Dextranabläufe entsprechen in etwa denen in JACS 78, Seiten 2514 bis 2518 (1956) beschriebenen, so daß ebenfalls, bezogen auf Saccharose, eine Ausbeute von ca. 8 % angenommen werden kann. In der Einleitung dieser Entgegenhaltung findet sich zwar der Hinweis, daß die bei der Dextranherstellung anfallenden Mutterlaugen für diätetische Zwecke verwendet werden können. Dabei ist jedoch zweifellos an den Hauptbestandteil Fructose gedacht worden, der für die menschliche Ernährung nutzbar gemacht werden sollte. Ziel der Untersuchung war es, festzustellen, ob die weiteren Bestandteile in diesen Dextranabläufen physiologisch verträglich sind und daher ohne vorherige Abtrennung ebenfalls für die menschliche Ernährung nutzbar gemacht werden können.

Das technische Problem der Erfindung ist es daher, ein technisch brauchbares Verfahren zur Herstellung größerer Mengen reiner Leucrose, die als nicht-kariogenes, für Diabetiker geeignetes, energetisch voll verwertbares und gut verträgliches Süßungsmittel verwendet werden kann, zu entwikkeln. Das technische Problem wird durch die Bereitstellung eines Süßungsmittel gelöst, das mindestens 50 Gew.-% Leucrose und zusätzlich ein oder mehrere Süßungsmittel aus der Gruppe der Süßstoffe und Zuckeraustauschstoffe enthält.

Das erfindungsgemäße Mittel besitzt diese Eigenschaften. Es hat sich nämlich gezeigt, daß bei dem Standardtest auf Karies mit Streptococcus mutans keine Säurebildung beobachtet wird. Weiterhin ist Leucrose kein Akzeptor für Glucose, so daß keine Dextrane entstehen, die zu der gefürchteten Plague-Bildung führen. Versuche mit Darmbakterien haben gezeigt, daß die Leucrose mit einer Geschwindigkeit gespalten wird, die etwa 1/5 bis 1/3 der Geschwindigkeit der Maltose entspricht. Die Leucrose ist somit ein voll energetisch verwertbares Kohlenhydrat, das jedoch im Vergleich zur Saccharose und Maltose eine geringere Spaltungsgeschwindigkeit aufweist. Sie führt daher nicht zu dem typisch steilen Anstieg der Blutglucose durch Saccharose oder Maltose. Es ist daher zu erwarten, daß die Leucrose im Gegensatz zur Saccharose und Maltose zu keiner oder nur wesentlich geringerer Insulinsekretion anregt. Die Leucrose erscheint daher auch für Diabetiker besonders geeignet. Bei der Spaltung durch die Darmbakterien entstehen im übrigen nur 50 % der den Blutglucosespiegel direkt beeinflussenden Glucose und 50 % Fructose. Die Fructose belastet bekanntlich zumindest in gewissen Grenzen den Blutglucosespiegel nicht. Die Fructose wird weitgehend über die Leber verstoffwechselt und beteiligt sich am Glucogenaufbau.

Die Spaltung der Leucrose durch Darmbakterien findet dennoch so rasch statt, daß nicht größere Mengen ungespalten in den Dickdarm gelangen und durch die sehr späte Verstoffwechselung zu Durchfällen führen. Dies ist insbesondere bei Kindern, aber auch bei Diabetikern von erheblicher Bedeutung. Erst die jetzt vorliegenden exakteren Meßergebnisse haben bestätigt, daß Leucrose nur mit ca. 38 % der Geschwindigkeit der Saccharose gespalten wird und daher excellent als Zuckeraustauschstoff für Diabetiker geeignet ist.

Nachdem es jetzt gelungen ist, Leucrose in großen Mengen und wirtschaftlich herzustellen und zu reinigen, besteht erstmals die Möglichkeit, dieses Disaccharid als Süßungsmittel für Nahrungs-, Genuß- und Futtermittel in fester oder flüssiger Form einzusetzen. Dabei sollte der Gehalt der Süßungsmittel an Leucrose mindestens 50 Gew.-% betragen. Erfindungsgemäß ist es jedoch ohne weiteres möglich, die Leucrose mit einer Reinheit von mindestens 98 % herzustellen. Bei der Verwendung der Leucrose als nicht-kariogenes, für Diabetiker geeignetes, energetisch voll verwertbares, gut verträgliches Süßungsmittel reicht jedoch bereits ein Reinheitsgrad von mindestens 95 Gew.-% aus.

Bei dem erfindungsgemäßen Verfahren zur Herstellung der Leucrose entsteht sie in einem Gemisch mit Dextranen und iso-Maltooligosacchariden sowie etwas Fructose. Die Dextrane und iso-Maltooligosaccharide sind zumindest teilweise leicht abtrennbar, so daß Leucrose mit einem Gehalt von mindestens 50 Gew.-% entsteht. Da sowohl Fructose als auch niedere iso-Maltooligosaccharide als Süßungsmittel verwendbar sind, können für eine Reihe von Verwendungszwecken die unmittelbar entstehenden Gemische aus Leucrose, Fructose und niederen iso-Maltooligosacchariden direkt eingesetzt werden. Es ist jedoch möglich, sowohl die Fructose als auch die Dextrane und iso-Maltooligosaccharide chromatographisch so weitgehend abzutrennen, daß Leucrose mit Reinheitsgraden von mindestens 95, vorzugsweise 98 Gew.-%, entsteht.

Gewünschtenfalls kann die Leucrose aber auch mit anderen bekannten Süßungsmitteln gemischt werden, insbesondere ist hierbei an die Süßstoffe wie Saccharin, Cyclamat, Acesulfam K, Aspartam[R] und Talin zu denken. Für gewisse andere Verwendungszwecke kommen aber auch Gemische mit Zuckeraustauschstoffen, wie Sorbit, Mannit, Maltit, Xylit, Palatinit[R] und Lycasin[R] in Frage.

Das erfindungsgemäße Verfahren zur Herstellung von Leucrose mit einem Reinheitsgrad von mindestens 50 Gew.-% ist dadurch gekennzeichnet, daß Saccharose mit alpha-(1-6) Glucosyltransferase in Gegenwart von mindestens 100 mMol Fructose pro 1000 IU Enzym umgesetzt wird und die Dextrane und iso-Maltooligosaccharide zumindest teilweise abgetrennt werden. Vorzugsweise werden mehr als 300 mMol Fructose pro 1000 IU Enzym eingesetzt. Die Reaktion wird vorzugsweise im Temperaturbereich von 265 bis 310 K und bei einem pH Wert von 4,5 bis 8,0 durchgeführt. Die Konzentration an Saccharose wird aus wirtschaftlichen Gründen so hoch wie möglich gewählt. Prinzipiell sind auch Konzentrationen von 70 % Saccharose möglich, jedoch sinkt bei so hohen Saccharosekonzentrationen die Umsetzungsgeschwindigkeit. Konzentrationen unter 20 % führen zu niedrigeren Ausbeuten und erfordern bei der späteren Aufarbeitung unnötigen Aufwand an Energie. Vorzugsweise wird daher mit Konzentrationen von 35 bis 50 % Saccharose gearbeitet.

Die eingesetzte Fructose als Akzeptor wird im Laufe des Verfahrens aus der Saccharose nachgebildet, so daß die Fructosekonzentration während des Verfahrens praktisch konstant bleibt. Glucose ist ein wesentlich besserer Akzeptor, so daß entstehende Glucose sehr rasch zu iso-Maltooligosacchariden und Dextranen weiter reagiert. Nach Beendigung der Reaktion liegen somit praktisch keine Saccharose und keine Glucose mehr vor, so daß hiervon auch nicht abgetrennt werden muß. Dextrane und iso-Maltooligosaccharide lassen sich zumindest teilweise in an sich bekannter Weise, beispielsweise chromatographisch aus dem Gemisch abtrennen. Mit Hilfe von Polystyrolsulfonatkationenaustauschern in der Calciumform ist es sogar möglich, diese Nebenprodukte und die Fructose praktisch vollständig abzutrennen.

Das Verfahren wird vorzugsweise in der Weise duchgeführt, daß die Zugabe der wäßrigen Saccharoselösung zu. dem Gemisch aus Fructose und Enzym so erfolgt, daß die zugefügte Saccharose so rasch wie möglich umgesetzt wird und somit stets nur in geringer Konzentration im Reaktionsgemisch vorliegt.

Eine weitere bevorzugte Ausführungsform besteht darin, Glucosyltransferase auf einem Träger zu fixieren bzw. in einen porösen Träger einzuschließen. Die Bindung des Enzyms auf einen Träger kann prinzipiell nach allen üblichen Verfahren zur Bindung von Enzymen auf Träger erfolgen, vorausgesetzt, daß durch die Bindung nicht die Aktivität des Enzyms zu stark vermindert wird. Das Enzym kann auch in einen porösen Träger eingeschlossen werden. Beispielsweise läßt es sich perlförmig in Alginat einbringen und kann in dieser Form mit der Fructose und Saccharose umgesetzt werden. Auch hierbei ist darauf zu achten, daß mindenstens 100, vorzugsweise 300 mMol Fructose pro 1000 IU Enzym vorliegen. Die Ausbeuten an Leucrose, bezogen auf Saccharose, liegen erfindungsgemäß bei 40 und mehr %. Die als Nebenprodukte anfallenden Dextrane und iso-Maltooligosaccharide können in üblicher Weise verwendet werden und erhöhen die Wirtschaftlichkeit des Verfahrens.

Als Abtrennungsverfahren kommen insbesondere Chromatographie mit "Size Exclusion Gelen" oder Polystyrolsulfonatkationenaustauscherharzen in der Calciumform in Frage. Insbesondere die Dextrane und höhermolekularen iso-Maltooligosaccharide können vorteilhaft schon vor der Chromatographie, z.B. durch Membrantrennverfahren wie Ultrafiltration abgetrennt werden. Insbesondere die Chromatographie auf Polystyrolsulfonatkationenaustauscherharzen in der Calciumform gestattet auch die Abtrennung der Fructose. Die Fructose kann gewünschtenfalls in das Verfahren wieder eingeführt werden, da sie stets in gleicher Menge nachgebildet wird und damit scheinbar eine Katalysatorfunktion übernimmt.

In den nachfolgenden Beispielen ist das erfindungsgemäße Verfahren zur Herstellung und Reinigung der Leucrose sowie seine Verwendung näher erläutert.

Beispiel 1

In 6 l einer wäßrigen Lösung des Enzyms alpha-(1-6) Glucosyltransferase (Dextransucrase), die eine Aktivität von 7500 IU/l hatte, wurden 4000 g kristalline Fructose bei 298 K gelöst. Der pH-Wert der Lösung betrug 5,4. Zu dieser Lösung wurden 30 l einer 40 % Saccharoselösung mit einem pH-Wert von 5,4 gegeben. Nach 48 h betrug der Gehalt an Saccharose weniger als 1 % in der Trockensubstanz und der Gehalt an Leucrose 30,1 %, was einer Ausbeute von 40,1 %, bezogen auf eingesetzte Saccharose, entspricht.

Beispiel 2

In eine 4 % Natriumalginatlösung wurden 40 ml einer Dextransucraselösung, die eine Aktivität von 320 IU hatte, eingerührt. Die Enzym/Alginatlösung wurde aus einer Pipette in eine 1 % Calciumchloridlösung getropft, woraufhin sich unter Gelierung des Alginates perlförmige Teilchen bildeten. Diese wurden mit destilliertem Wasser ausgewaschen. Die dextransucrasehaltigen Alginatperlen wurden in eine Säule gefüllt und ergaben ein Gelbett von 196 ml. Die Enzymaktivität betrug 1,3 IU/ml Alginatgel.

Durch dieses Gelbett wurden 8 ml/h einer wäßrigen Saccharose/Fructoselösung, die 10 g Fructose und 45 g Saccharose pro 100 g Lösung enthielt, gepumpt. In der aus dem Gelbett ablaufenden Lösung waren 32,8 % Leucrose enthalten, was einer Ausbeute von 40,0 %, bezogen auf Saccharose, entspricht.

Beispiel 3

18 kg mit einer Trockensubstanz von 35 % einer nach Beispiel 1 erhaltenen Leucrose enthaltenden wäßrigen Lösung wurden auf eine 6 m hohe Trennkolonne, die 190 l Polystyrolsulfonatkationenaustauscher, beladen mit Calciumionen, enthielt, aufgegeben. Durch Zuführen von 35 l/h destilliertem Wasser wurden die auf die Trennsäule gegebenen Saccharide eluiert. Nach einem Vorlauf von 51 l wurden innerhalb der nächsten 38 l etwas Dextran und iso-Maltooligosaccharide eluiert.

Die nachfolgende Fraktion von 3 l enthielt 112 g Leucrose neben 39 g anderen Sacchariden, die sich anschliessende Fraktion von 12 l enthielt 1041 g Leucrose mit einer Reinheit von 96,1 %. Innerhalb der nächsten 3 l wurden weitere 158 g Leucrose neben 50 g Fructose und 2 g Glucose eluiert.

Die so entstandenen Leucroselösungen können gewünschtenfalls unmittelbar als Süßungsmittel eingesetzt werden. Sie können auch weiter eingedickt werden zu einem Sirup. Feste Leucrose erhält man beispielsweise durch Gefriertrocknung der Lösungen.

Beispiel 4

Die gemäß Beispiel 3 erhaltene Leucrosefraktion, die durch einen zweiten chromatographischen Reinigungsschritt auf eine Reinheit von 98,1 % gebracht worden war, wurde unter Verwendung von Streptococcus mutans NCTC 10449 auf Säurebildung getestet. Dabei wurde die Protonenproduktion sowohl durch Registrierung des pH Abfalls im Ansäuerungsversuch als auch des Laugenverbrauchs (pH Konstanz) durch automatische Rücktitration erfaßt. Es zeigte sich, daß Leucrose keine Säure bildet. Da Leucrose ein schlechtes Substrat für Glucose ist, bildeten sich auch keine Dextrane. Untersuchungen mit Darmbakterien haben ergeben, daß die Geschwindigkeit der Spaltung der Leucrose im Vergleich zur Spaltung von Maltose etwa 1/5 bis 1/3 beträgt. Die Spaltprodukte Fructose und Glucose stehen somit bereits im Dünndarm zur Verfügung und können energetisch voll verwertet werden. Es gelangt praktisch keine ungespaltene Leucrose in den Dickdarm.

Beispiel 5

In 1,6 l einer wäßrigen Lösung des Enzyms alpha-1-6-glucosyl-transferase (Dextransucrase), die eine Aktivität von 7.500 IU/l hatte, wurden 2000 g kristalline Fructose bei 298 K gelöst. Der pH-Wert der Lösung betrug 5.4. Zu dieser Lösung wurden 13 l wäßrige Saccharoselösung, die 5200 g Saccharose enthielt, innerhalb von 70 h zugepumpt. 2 h nach beendeter Saccharosezugabe betrug der Gehalt an Saccharose weniger als 1 % an der Trockensubstanz des Reaktionsgemisches und der Gehalt an Leucrose 38,1 %, was einer Ausbeute von 52,7 %, bezogen auf eingesetzte Saccharose, entspricht.

Die auf 75 bis 80 % Trockensubstanz eingedickte Lösung der Leucrose wird mit Impfkristallen versetzt und langsam (1 bis 3°/h) abgekühlt. Man erhält so Leucrose als Monohydrat in Form rhombischer Kristalle; Schmp. 159 - 160° C; $\alpha_D^{20}$ = -6.8°.

**Patentansprüche**

1. Süßungsmittel für Nahrungs-, Genuß- und Futtermittel in fester oder flüssiger Form, gekennzeichnet durch einen Gehalt von mindestens 50 Gew.-% Leucrose und einen zusätzlichen Gehalt an einem oder mehreren Süßungsmitteln aus der Gruppe der Süßstoffe und Zuckeraustauschstoffe.

2. Verfahren zur Herstellung von Leucrose mit einem Reinheitsgehalt von mindestens 50 Gew.-%, dadurch gekennzeichnet, daß Saccharose mit alpha-(1-6) Glucosyltransferase in Gegenwart von mindestens 100 mMol Fructose pro 1000 IU Enzym umgesetzt wird und die Dextrane und iso-Maltooligosaccharide zumindest teilweise abgetrennt werden.

3. Verfahren gemäß Anspruch 2, dadurch gekennzeichnet, daß zur Erhöhung des Reinheitsgrades auf mindestens 95 Gew.-% die Leucrose von der Fructose und den iso-Maltooligosacchariden chromatographisch abgetrennt wird.

4. Verwendung von Leucrose mit einem Reinheitsgrad von mindestens 50 Gew.-% in fester oder flüssiger Form als Süßungsmittel für Nahrungs-, Genuß- und Futtermittel.

5. Verwendung gemäß Anspruch 4, dadurch gekennzeichnet, daß die Leucrose einen Reinheitsgrad von mindestens 95 Gew.-% aufweist.

6. Verwendung von Leucrose gemäß Anspruch 4 oder 5, dadurch gekennzeichnet, daß sie als Gemisch mit einem oder mehreren Süßungsmitteln aus der Gruppe der Süßstoffe und Zuckeraustauschstoffe vorliegt.

7. Verwendung von Leucrose mit einem Reinheitsgrad von mindestens 95 Gew.-% als nichtkariogenes, für Diabetiker geeignetes, energetisch voll verwertbares, gut verträgliches Süßungsmittel.

**Claims**

1. A sweetening agent for foods, luxury foods and animal foods in the solid or liquid states, characterized by a content of at least 50% by weight of leucrose and an additional content of one or more sweetening agents selected from the group of sweeteners and sugar surrogates.

2. A process for producing leucrose having a purity of at least 50% by weight, characterized in that saccharose is reacted with $\alpha$-(1-6)-glucosyl transferase in the presence of at least 100 mmoles of fructose per 1,000 I.U. of enzyme, and the dextrans and iso-malto-oligosaccharides are at least partially separated.

3. The process according to claim 2, characterized in that, in order to increase the purity to at least 95% by weight, the leucrose is chromatographically separated from the fructose and the iso-malto-oligosaccharides.

4. Use of leucrose having a purity of at least 50% by weight in the solid or liquid states as a sweetening agent for foods, luxury foods and animal foods.

5. Use according to claim 4, characterized in that the leucrose has a purity of at least 95% by weight.

6. Use of leucrose according to claims 4 or 5, characterized in that it is present as a mixture with one or more sweetening agents from the group of sweeteners and sugar surrogates.

7. Use of leucrose having a purity of at least 95% by weight as a non-cariogenic, energetically fully utilizable, well compatible sweetening agent which is also suitable for diabetics.

**Revendications**

1. Edulcorant pour produits alimentaires, stimulants et aliments pour bétail, sous forme solide ou liquide, caractérisé en ce qu'il contient au moins 50 % en poids de leucrose et une quantité supplémentaire d'un ou plusieurs édulcorants du groupe des saccharines et des produits de substitution du sucre.

2. Procédé de préparation de leucrose ayant un degré de pureté d'au moins 50 % en poids, caractérisé en ce qu'on fait réagir du saccharose avec de l'alpha-(1-6) glucosyltransférase en présence d'au moins 100 mmoles de fructose pour 1.000 U.I. d'enzyme, et on sépare, au moins partiellement le dextrane et les iso-malto-oligosaccharides.

3. Procédé selon la revendication 2, caractérisé en ce que, pour augmenter le degré de pureté à au moins 95 % en poids, on sépare le leucrose du fructose et des iso-malto-oligosaccharides, par chromatographie.

4. Utilisation du leucrose ayant un degré de pureté d'au moins 50 % en poids, sous forme solide ou liquide, comme édulcorant pour produits alimentaires, stimulants et aliments pour bétail.

5. Utilisation selon la revendication 4, caractérisée en ce que le leucrose a un degré de pureté d'au moins 95 % en poids.

6. Utilisation du leucrose selon la revendication 4 ou 5, caractérisée en ce qu'il se présente sous forme de mélange avec un ou plusieurs édulcorants du groupe des saccharines et des produits de substitution du sucre.

7. Utilisation du leucrose ayant un degré de pureté d'au moins 95 % en poids, comme édulcorant non-cariogène, convenant aux diabétiques, pouvant être utilisé complètement du point de vue énergétique et bien compatible.